# EUROPEAN PATENT SPECIFICATION

(11) **EP 2 466 816 B1**
(45) Date of publication and mention of the grant of the patent: **27.05.2015**
(21) Application number: 10816660.4
(22) Date of filing: 25.08.2010
(51) Int. Cl.: H04L 12/911

(54) **METHOD AND DEVICE FOR DETECTING VALIDATION OF AN ACCESS CONTROL LIST**
VERFAHREN UND VORRICHTUNG ZUR ERKENNUNG DER GÜLTIGKEIT EINER ZUGANGSSTEUERUNGSLISTE
PROCÉDÉ ET DISPOSITIF PERMETTANT DE DÉTECTER LA VALIDATION D'UNE LISTE DE CONTRÔLE D'ACCÈS

(30) Priority: 17.09.2009 CN 200910092961
(43) Date of publication of application: 20.06.2012
(73) Proprietor: ZTE Corporation, Shenzhen, Guangdong 518057 (CN)
(72) Inventor: GAO, Feng, Shenzhen Guangdong 518057 (CN); LI, Jiangwei, Shenzhen Guangdong 518057 (CN)
(74) Representative: Appleyard Lees
(86) International application number: PCT/CN2010/076326
(87) International publication number: WO 2011/032456

(56) References cited:
- EP-A1- 1 770 935
- EP-A1- 1 858 211
- WO-A1-2006/037361
- CN-A- 101 039 271
- CN-A- 101 247 397
- CN-A- 101 364 947
- CN-A- 101 662 425
- US-A1- 2006 294 297
- US-A1- 2008 240 150

## Description

### Technical Field

The present invention relates to an access control management technique of service access, and in particular, to a method and apparatus for detecting validation of an access control list.

### Background of the Related Art

Nowadays, the speed of network development is amazing, and network security issues also appear relatively prominent, for a network device (including routers, switches, and so on) carrying a variety of network services, it is particularly important to have its own safety precautions, and the access control list is a good helper.

The function of the Access Control List (ACL) is to filter specific data packets passing through the network device. The ACL classifies the data packets through a series of matching conditions, and these conditions may be source addresses, destination addresses and port numbers of the data packets, and the switch detects the data packets according to the conditions specified in the ACL to decide whether to forward or discard the data packets.

The ACL comprises a port ACL, a global ACL and a VLAN-ACL. The port ACL is an ACL configuring different ACL actions for different ports on the device to implement different control of each port; the global ACL provides users with an ACL configuration mechanism that takes effect at all ports on the whole device; and the VLAN-ACL is an ACL based on a Virtual LAN (VLAN), and the users implements access control of all ports within the VLAN by configuring the VLAN with ACL actions.

Since the ACL plays the role of "firewall" in the network device, whether it can work normally or not and how to judge whether the ACL works normally or not become a key issue.

Generally, an ACL rule in the ACL includes two relatively important parts: a qualify part and an action part.

For example: if an ACL rule which needs to be configured is to discard data packets whose source IP addresses are 10.1.1.1 at port A, then this rule satisfies:
Qualify = port A + source IP 10.1.1.1
Action = discard

When this ACL Rule is configured to port A, the data packets which meet the Qualify condition should be discarded under normal circumstances; however, the network device is often not as simple as we imagine, and sometimes such packets will be normally forwarded rather than discarded. Then, whether the ACL rule does not take effect or although the ACL rule takes effect the forwarding of the packets occurs due to influences of other procedures is required to be judged according to a certain measure.

Thus, judging whether the ACL rule takes effect is a problem required to be solved.

At present, a number of attempts have been made, for example:

A mode is to mirror a data flow to a certain other physical port by modifying the action of the ACL rule to make it perform a port mirror action, and thus, if the mirrored physical port can catch the data flow, it is illustrated that the ACL rule can be normally qualified, that is, the ACL rule takes effect, and if the mirrored physical port cannot catch the data flow, it is illustrated that the ACL rule is not qualified, that is, the ACL rule does not take effect.

Another mode is to try changing the action part of the ACL rule into copying the data flow qualifying the ACL rule to the device's own Central Processing Unit (CPU), that is, changing the Action into copy to CPU, and thus, if the data flow can normally qualify the ACL rule, the CPU is able to receive the data flow, and the data flow can be seen through a CPU's own debugging mode, which means that the ACL rule takes effect; and if the ACL rule is not qualified, the data flow cannot be seen on the CPU, which also means that the ACL rule does not take effect.

These two modes are modes which only diagnose whether the ACL rule takes effect or not in the early stage. Although these two modes can meet the requirements, both are relatively cumbersome. The first method needs the help of other ports, and if all the ports of the network device are used up, this mode cannot be implemented, and in addition, mirroring of ports increases the load of the network device and is not recommended to use in existing network devices; and the second mode is even more dangerous, the CPU of the device is used to process protocol packets and to maintain the device status, and if there are a large number of data packets which are forced to be caught to the CPU, it is likely to lead to the entire device working abnormally.

The document US 2008/240150 A1 discloses a method and apparatus for network distribution and provisioning of applications across multiple domains.

### Summary of the Invention

In view of this, the main purpose of the present invention is to provide a method and apparatus for detecting validation of an access control list to effectively judge whether the ACL rule takes effect or not.

In order to achieve the aforementioned purpose, the technical scheme of the present invention is implemented by the following.

The present invention provides a method for detecting validation of an access control list, comprising:
when performing an action part of an ACL rule each time, starting a counter attached to the currently performed ACL rule in accordance with an attachment mode;
the counter counting in accordance with a preset counting mode and storing the count value; and
reading the count value stored in the counter attached to the ACL rule, and if there is a count value, determining that the currently read ACL rule takes effect; otherwise, determining that the currently read ACL rule does not take effect.

In the aforementioned scheme, the attachment mode is a mode of taking starting of a counter as an action in an action part of an ACL rule; or a mode of starting a counter by detecting a result of an action part of an ACL rule.

In the aforementioned scheme, the counting mode is a mode of counting a number of packets or a mode of counting a number of bytes of packets; wherein,
the mode of counting a number of packets is that the count value is automatically added by 1 each time the counter is started;
the mode for counting a number of bytes of packets is that the count value is added by a number of bytes of packets that qualify the currently performed ACL rule at this time when the counter is started each time.

In the aforementioned scheme, the counter is pre-applied in a counter resource pool of a device itself; and the application uses a static application mode or a dynamic application mode to apply; wherein,
in the aforementioned scheme, using the static application mode to apply is applying a counter for each ACL rule in the device, including applying a counter for each empty ACL rule; and
in the aforementioned scheme, using the dynamic application mode to apply is applying a counter for each ACL rule that needs to be detected in the device.
In the aforementioned scheme, after reading the count value stored in the counter, the method further comprises clearing the count value in the counter.

The present invention provides an apparatus for detecting validation of an access control list, comprising: a start-up module, a counter, and a read-out module; wherein
the start-up module is used to start a counter attached to a currently performed ACL rule in accordance with an attachment mode when performing an action part of an ACL rule each time;
the counter is used to count in accordance with a preset counting mode and store the count value; and
the read-out module is used to read the count value stored in the counter attached to the ACL rule, and if there is a count value, determine that the currently read ACL rule takes effect; otherwise, determine that the currently read ACL rule does not take effect.

In the aforementioned scheme, the read-out module is further used to clear the count value in the counter after reading the count value stored in the counter.

The present invention provides a method and apparatus for detecting validation of an access control list. A counter is attached to an ACL rule in accordance with a certain attachment mode by pre-applying the counter in a counter resource pool of a device itself; when an action part of the ACL rule is performed each time, the counter attached to this ACL rule is started in accordance with the attachment mode, and the counter counts in accordance with a preset counting mode, whether this ACL rule takes effect or not is judged according to whether there is a count value or not by reading the count value stored in the counter, thus implementing neither increasing the network load nor impacting the safety of the CPU of the device while judging whether the ACL rule takes effect or not. In addition, the method for judging whether the ACL rule takes effect or not by checking the count value is relatively simple, and can accelerate positioning a fault in a network.

### Brief Description of Drawings

FIG. 1 is a flow chart for implementing a method for detecting validation of an access control list in accordance with the present invention; and
FIG. 2 is a structural diagram for implementing an apparatus for detecting validation of an access control list in accordance with the present invention.

### Preferred Embodiments of the Present Invention

The basic idea of the present invention is to pre-apply a counter in a counter resource pool of a device itself, and attach the counter to an ACL rule in accordance with a certain attachment mode; start the counter attached to the currently performed ACL rule in accordance with the attachment mode when an action part of the ACL rule is performed each time, and count by the counter in accordance with a preset counting mode, and judge whether this ACL rule takes effect or not according to whether there is a count value or not by reading the count value stored in the counter.

There are two modes for applying the counter in the counter resource pool of the device itself.

One mode is to apply a counter for each ACL rule in the device, including applying a counter for each empty ACL rule, and this mode is a static application mode, which will take up counter resources of the device, but when a new ACL rule is set for a certain empty ACL rule, there is no need to re-apply a counter.

The other mode is to apply a counter for each ACL rule that needs to be detected in the device, and this mode is a dynamic application mode, which will take up few device resources, but there is a need to apply a counter for each new ACL rule that needs to be detected when a new ACL rule that needs to be detected is set.

Specifically, the attachment mode is a mode of taking starting of a counter as an action in an action part of an ACL rule; or a mode of starting a counter by means such as detecting a result of an action part of an ACL rule.

Said counting mode includes a mode of counting a number of packets or a mode of counting a number of bytes of packets, and so on.

The present invention will be further described in detail in conjunction with accompanying drawings and specific embodiments hereinafter.

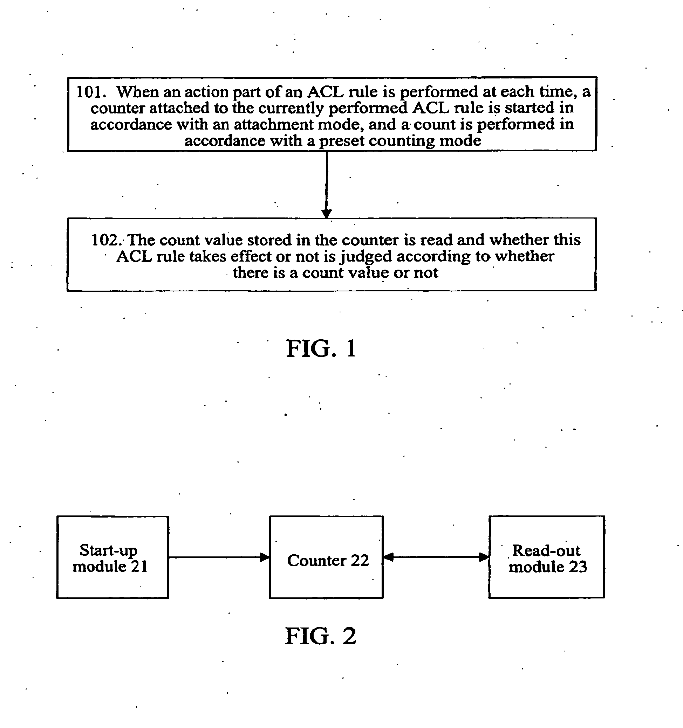

The present invention implements a method for detecting validation of an access control list to pre-apply a counter in the counter resource pool of the device itself and to attach the counter to the ACL rule. As shown in FIG. 1, the method comprises the following steps.

In Step 101, when an action part of an ACL rule is performed each time, a counter attached to a currently performed ACL rule is started in accordance with an attachment mode; a count is performed in accordance with a preset counting mode and a count value is stored.

Specifically, if the attachment mode of attaching the counter to an ACL rule uses the mode of taking starting a counter as an action in an action part of the ACL rule, then when an action part of an ACL rule is performed each time, the counter is started in the action part of the ACL rule, and the counter counts in accordance with the preset counting mode; and if the attachment mode of attaching the counter to an ACL rule uses the mode of starting the counter by detecting a result of an action part of this ACL rule, then when the action part of the ACL rule is performed each time, the result of the action part of the ACL rule is detected, and the counter is started when is the result is detected and the counter counts in accordance with the preset counting mode, and the count value is stored; and when no result is detected, the counter is not started.

In this step, when the preset counting mode is the mode of counting a number of packets, the count value is automatically added by 1 each time the counter is started; and when the preset counting mode is the mode of counting a number of bytes of packets, the count value is added by a number of bytes of the packets that qualify the currently performed ACL rule at this time when the counter is started each time.

In Step 102, the count value stored in the counter is read and whether this ACL rule takes effect or not is judged according to whether there is a count value or not.

Specifically, when there is a need to judge whether an ACL rule takes effect or not, the count value stored in the counter attached to the ACL rule can be read, and if there is a count value, it is determined that the ACL rule takes effect; otherwise, it is determined that the ACL rule does not take effect.

In this step, at the same time of reading the count value stored in the counter attached to the ACL rule, the counter can be further cleared to prevent the count value in the counter from exceeding a maximum value.

Based on the aforementioned method, the present invention implements an apparatus for detecting validation of an access control list. As shown in FIG. 2, the device comprises: a start-up module 21, a counter 22, and a read-out module 23; wherein,
the start-up module 21 is used to start the counter 22 attached to the currently performed ACL rule in accordance with an attachment mode when an action part of an ACL rule is performed each time.

Specifically, if the attachment mode uses the mode of taking starting of the counter 22 as an action in the action part of the ACL rule, the start-up module 21 is triggered to start the counter 22 in the action part of the ACL rule when an action part of an ACL rule is performed each time; if the attachment mode uses the mode of starting the counter 22 by detecting a result of the action part of this ACL rule, when the action part of this ACL rule is performed each time, the start-up module 21 detects a result of the action part of this ACL rule, and when the result is detected, the counter 22 is started; and when the start-up module 21 does not detect the result, the counter 22 is not started.

The counter 22 is used to count in accordance with a preset counting mode and store the count value.

Specifically, when the preset counting mode is the mode of counting a number of packets, the count value is automatically added by 1 each time the counter 22 is started; and when the preset counting mode is the mode of counting a number of bytes of packets, the count value is added by a number of bytes of packets that qualify the currently performed ACL rule at this time when the counter 22 is started each time.

The read-out module 23 is used to read the count value stored in the counter 22 attached to an ACL rule, and if there is a count value, it is determined that the currently read ACL rule takes effect; otherwise, it is determined that the currently read ACL rule does not take effect.

Further, the read-out module 23 is further used to clear the count value in the counter 22 after reading the count value stored in the counter 22.

In summary, whether the ACL rule takes effect or not can effectively be judged by the method for attaching the counter to the ACL rule, thus implementing neither increasing the network load nor impacting the safety of the CPU of the device while judging whether the ACL rule takes effect or not. In addition, the method for judging whether the ACL rule takes effect or not by checking the count value is relatively simple, and can accelerate the positioning of a fault in a network.

## Claims

1. A method for detecting validation of an Access Control List (ACL), **characterized by** comprising:
when performing an action part of an ACL rule each time, starting a counter attached to the currently performed ACL rule in accordance with an attachment mode (101);
the counter counting in accordance with a preset counting mode and storing a count value (101); and
reading the count value stored in the counter attached to the ACL rule, and if there is a count value, determining that the currently read ACL rule takes effect; otherwise, determining that the currently read ACL rule does not take effect (102).

2. The method of claim 1, wherein, the attachment mode is: taking starting the counter as an action of the action part of the ACL rule; or starting the counter by detecting a result of the action part of the ACL rule.

3. The method of claim 1 or 2, wherein, the counting mode is a mode of counting a number of packets or a mode of counting a number of bytes of packets; wherein,
the mode of counting a number of packets is that the count value is automatically added by 1 each time the counter is started;
the mode for counting a number of bytes of packets is that the count value is added by a number of bytes of packets that qualify the currently performed ACL rule at this time when the counter is started each time.

4. The method of claim 1 or 2, wherein, the counter is pre-applied in a counter resource pool of a device itself; and the application uses a static application mode or a dynamic application mode to apply; wherein,
said using a static application mode to apply is applying a counter for each ACL rule in the device, including applying a counter for each empty ACL rule; and
said using a dynamic application mode to apply is applying a counter for each ACL rule that needs to be detected in the device.

5. The method of claim 4, wherein, after reading the count value stored in the counter, the method further comprises clearing the count value in the counter.

6. An apparatus for detecting validation of an Access Control List (ACL), **characterized by** comprising: a start-up module (21), a counter (22), and a read-out module (23); wherein
the start-up module (21) is used to start the counter attached to a currently performed ACL rule in accordance with an attachment mode when performing an action part of an ACL rule each time;
the counter (22) is used to count in accordance with a preset counting mode and store the count value; and
the read-out module (23) is used to read the count value stored in the counter (22) attached to the ACL rule, and if there is a count value, determine that the currently read ACL rule takes effect; otherwise, determine that the currently read ACL rule does not take effect.

7. The apparatus of claim 6, wherein, the read-out module (23) is further used to clear the count value of the counter (22) after reading the count value stored in the counter (22).

## Patentansprüche

1. Verfahren zur Erkennung einer Gültigkeit einer Zugangssteuerungsliste (Access Control List - ACL), **dadurch gekennzeichnet, dass** es folgendes aufweist:
bei jedem Ausführen eines Maßnahmenteils einer ACL-Regel, Starten eines Zählers, der an der aktuell ausgeführten ACL-Regel gemäß einem Anbringungsmodus angebracht ist (101);
wobei der Zähler gemäß einem im Voraus eingestellten Zählmodus zählt und einen Zählwert speichert (101); und
Lesen des Zählwerts, der im Zähler gespeichert ist, der an der ACL-Regel angebracht ist, und wenn ein Zählwert vorhanden ist, Bestimmen, dass die aktuell gelesene ACL-Regel wirksam ist; andernfalls Bestimmen, dass die aktuell gelesene ACL-Regel nicht wirksam ist (102).

2. Verfahren nach Anspruch 1, wobei der Anbringungsmodus folgender ist: Starten des Zählers als eine Maßnahme des Maßnahmenteils der ACL-Regel; oder Starten des Zählers durch Erfassen eines Ergebnisses des Maßnahmenteils der ACL-Regel.

3. Verfahren nach Anspruch 1 oder 2, wobei der Zählmodus ein Modus zum Zählen einer Anzahl von Paketen ist oder ein Modus zum Zählen einer Anzahl von Bytes von Paketen ist; wobei
der Modus zum Zählen einer Anzahl von Paketen ist, dass der Zählwert bei jedem Starten des Zählers automatisch um 1 erhöht wird;
der Modus zum Zählen einer Anzahl von Bytes von Paketen ist, dass der Zählwert bei jedem Starten des Zählers um eine Anzahl von Bytes von Paketen, die die aktuell durchgeführte ACL-Regel zu diesem Zeitpunkt qualifizieren, erhöht wird.

4. Verfahren nach Anspruch 1 oder 2, wobei der Zähler in einem Zählerressourcenpool einer Vorrichtung selbst im Voraus angewendet wird und die Anwendung einen statischen Anwendungsmodus oder einen dynamischen Anwendungsmodus zur Anwendung verwendet; wobei
die Verwendung eines statischen Anwendungsmodus zur Anwendung eine Anwendung eines Zählers für jede ACL-Regel in der Vorrichtung ist, einschließlich einer Anwendung eines Zählers für jede leere ACL-Regel; und
die Verwendung eines dynamischen Anwendungsmodus zur Anwendung eine Anwendung eines Zählers für jede ACL-Regel ist, die in der Vorrichtung erfasst werden muss.

5. Verfahren nach Anspruch 4, wobei nach dem Lesen des Zählwerts, der im Zähler gespeichert ist, das Verfahren ferner das Löschen des Zählwerts im Zähler aufweist.

6. Vorrichtung zur Erkennung einer Gültigkeit einer Zugangssteuerungsliste (Access Control List - ACL), **dadurch gekennzeichnet, dass** sie Folgendes aufweist: ein Inbetriebnahmemodul (21), einen Zähler (22) und ein Auslesemodul (23); wobei
das Inbetriebnahmemodul (21) bei jedem Ausführen eines Maßnahmenteils einer ACL-Regel zum Starten des Zählers verwendet wird, der an einer aktuell ausgeführten ACL-Regel gemäß einem Anbringungsmodus angebracht ist;
der Zähler (22) zum Zählen gemäß einem im Voraus eingestellten Zählmodus und Speichern des Zählwerts verwendet wird; und
das Auslesemodul (23) zum Lesen des Zählwerts, der im Zähler (22) gespeichert ist, der an der ACL-Regel angebracht ist, und wenn ein Zählwert vorhanden ist, zum Bestimmen, dass die aktuell gelesene ACL-Regel wirksam ist, verwendet wird; andernfalls zum Bestimmen, dass die aktuell gelesene ACL-Regel nicht wirksam ist.

7. Vorrichtung nach Anspruch 6, wobei das Auslesemodul (23) ferner zum Löschen des Zählwertes des Zählers (22) nach dem Auslesen des Zählwertes, der im Zähler (22) gespeichert ist, verwendet wird.

## Revendications

1. Procédé de détection de la validation d'une liste de contrôle d'accès (ACL), **caractérisé en ce qu'**il comprend les étapes suivantes :
lors de l'exécution d'une partie d'action d'une règle ACL, à chaque fois, démarrer un compteur attaché à la règle ACL actuellement exécutée conformément à un mode d'attachement (101) ;
le compteur compte conformément à un mode de comptage prédéterminé et stocke une valeur de comptage (101) ; et
lire la valeur de comptage stockée dans le compteur attaché à la règle ACL et, s'il y a une valeur de comptage, déterminer que la règle ACL actuellement en cours de lecture prend effet ; sinon, déterminer que la règle ACL actuellement en cours de lecture ne prend pas effet (102).

2. Procédé selon la revendication 1, dans lequel le mode d'attachement comprend de considérer le démarrage du compteur comme une partie d'action de la règle ACL ; ou de démarrer le compteur en détectant un résultat de la partie d'action de la règle ACL.

3. Procédé selon la revendication 1 ou 2, dans lequel le mode de comptage est un mode comprenant de compter un nombre de paquets ou un mode comprenant de compter un nombre d'octets de paquets, où :
le mode de comptage d'un nombre de paquets comprend que la valeur de comptage se voit automatiquement ajouter 1 à chaque fois que le compteur est démarré ;
le mode de comptage d'un nombre d'octets de paquets comprend que la valeur de comptage se voit ajouter un nombre d'octets de paquets qui qualifient la règle ACL actuellement exécutée, à cet instant, lorsque le compteur est démarré, à chaque fois.

4. Procédé selon la revendication 1 ou 2, dans lequel le compteur est pré-appliqué dans un ensemble de ressources de compteur d'un dispositif, et l'application utilise un mode d'application statique ou un mode d'application dynamique pour s'appliquer ; où
ladite utilisation d'un mode d'application statique comprend d'appliquer un compteur pour chaque règle ACL dans le dispositif, y compris d'appliquer un compteur pour chaque règle ACL vide ; et
ladite utilisation d'un mode d'application dynamique comprend d'appliquer un compteur pour chaque règle ACL qui doit être détectée dans le dispositif.

5. Procédé selon la revendication 4, dans lequel, après lecture de la valeur de comptage stockée dans le compteur, le procédé comprend en outre d'effacer la valeur de comptage dans le compteur.

6. Appareil pour détecter la validation d'une liste de contrôle d'accès (ACL), **caractérisé en ce qu'**il comprend : un module de démarrage (21), un compteur (22), et un module de lecture (23) ; dans lequel
le module de démarrage (21) est utilisé pour démarrer le compteur attaché à une règle ACL actuellement exécutée conformément à un mode d'attachement lors de l'exécution d'une partie d'action d'une règle ACL, à chaque fois ;
le compteur (22) est utilisé pour compter conformément à un mode de comptage prédéfini et stocker la valeur de comptage ; et
le module de lecture (23) est utilisé pour lire la valeur de comptage stockée dans le compteur (22) attaché à la règle ACL et, s'il y a une valeur de comptage, déterminer que la règle ACL actuellement en cours de lecture prend effet ; sinon, déterminer que la règle ACL actuellement en cours de lecture ne prend pas effet.

7. Appareil selon la revendication 6, dans lequel, le module de lecture (23) est en outre utilisé pour effacer la valeur de comptage du compteur (22) après la lecture de la valeur de comptage stockée dans le compteur (22).
